# EUROPÄISCHE PATENTSCHRIFT

(11) **EP 2 659 039 B1**
(45) Veröffentlichungstag und Bekanntmachung des Hinweises auf die Patenterteilung: **26.09.2018**
(21) Anmeldenummer: 12772110.8
(22) Anmeldetag: 11.10.2012
(51) Int. Cl.: D03D 13/00, D03D 1/00, D03D 5/00, B60R 22/12

(54) **SICHERHEITSGURTBAND FÜR EIN SICHERHEITSGURTSYSTEM**
SEAT-BELT STRAP FOR A SEAT-BELT SYSTEM
BANDE DE CEINTURE DE SECURITÉ POUR UN SYSTÈME DE CEINTURE DE SÉCURITÉ

(30) Priorität: 12.10.2011 DE 102011084336; 21.02.2012 DE 202012001690 U
(43) Veröffentlichungstag der Anmeldung: 06.11.2013
(73) Patentinhaber: Carl Stahl GmbH & Co. KG, 89542 Herbrechtingen (DE)
(72) Erfinder: BRIELMANN, Roland, 89542 Herbrechtingen (DE); RENNER, Jürgen, 89542 Herbrechtingen (DE)
(74) Vertreter: Schmid, Wolfgang
(86) Internationale Anmeldenummer: PCT/EP2012/070116
(87) Internationale Veröffentlichungsnummer: WO 2013/053790

(56) Entgegenhaltungen:
- DE-A1- 2 508 732
- DE-A1- 4 026 429

## Beschreibung

Die Erfindung betrifft ein Sicherheitsgurtband für ein Sicherheitsgurtsystem eines Kraftfahrzeugs, mit einem Gewebe aus Kettfäden und Schussfäden. Des Weiteren betrifft die Erfindung ein Verfahren zur Herstellung eines Sicherheitsgurtbands.

Ein gattungsgemäßes Sicherheitsgurtband ist aus der JP3273960A bekannt. Dieses Sicherheitsgurtband kann in einer 1/2-Köperbindung gewebt sein, wobei Acrylfäden verwendet werden, um gewisse optische Effekte zu erreichen. Da Acryl nicht die Festigkeitswerte der üblicherweise für Sicherheitsgurtbänder verwendeten Materialien aufweist, wird es nur mit einem Anteil von ca. 2 % verwendet. Grundsätzlich ist der Einsatz von Fäden mit einer geringeren Festigkeit im Bereich von Sicherheitsausstattungen als problematisch anzusehen.

Ein weiteres Sicherheitsgurtband ist aus der EP 0 350 169 B1 bekannt. Um ein farbiges Bindungsbild herzustellen, wird dabei eine aus vier Kettfadenphasen bestehende 2/2-Köperausgangsbindung verwendet und es werden ein oder mehrere Kettfadenphasen weggelassen, um ein unebenes Bindungsmuster auf der Oberfläche des Gurts zu bilden.

Die DE 20 2008 016 802 U1 beschreibt einen Gurt zur Verwendung als Fahrzeugsicherheitsgurt mit einer aus Kett- und Schussfäden bestehenden Gewebestruktur, wobei zumindest in einem Längenabschnitt des Gurts die Schussfäden im Vergleich zu den Kettfäden längungsfähig ausgebildet sind.

Ein weiteres Sicherheitsgurtband für Sicherheitsgurte wird in der DE 10 2009 001 545 A1 beschrieben. Hierbei weist das Gewebe eine Bindung mit sich in Querrichtung des Sicherheitsgurtbands erstreckenden Rippen auf, die in Längsrichtung des Sicherheitsgurtbands parallel zueinander angeordnet sind.

In der DE 10 2009 024 044 A1 ist ein Sicherheitsgurtband mit einer Leinwandbindung beschrieben, welches zwischen 200 und 350, insbesondere zwischen 245 und 305 Kettfäden aufweist, deren Fadenstärke zwischen 1000 und 1200 dtex liegt.

Ein aus mehreren Kettfäden und mindestens einem Schussfaden gebildeter Gurt, bei dem aufeinander folgende Einzüge des Schussfadens jeweils um einen anderen Kettfaden in dem Randbereich geschlungen sind, ist in der DE 10 2004 015 327 A1 beschrieben.

Ein weiteres Sicherheitsgurtband mit mehreren Kettfäden, einem Schussfaden und einem durch die Schlaufen des Schussfadens hindurch geführten Fangfaden, der zwischen den Kettfäden angeordnet ist und zur Oberfläche des Sicherheitsgurtbands durch den Schussfaden und/oder die Kettfäden abgedeckt ist, ist aus der DE 10 2009 058 039 B3 bekannt.

In der DE 10 2006 010 775 A1 ist ein Sicherheitsgurtband mit einem Innenbereich, einem weichen rechten Randbereich und einem weichen linken Randbereich sowie einem rechten Schussfaden und einem linken Schussfaden bekannt, bei dem der rechte Schussfaden nur im Innenbereich und im rechten Randbereich liegt und der linke Schussfaden nur im Innenbereich und im linken Randbereich liegt.

Die DE 199 62 919 C1 beschreibt ein Sicherheitsgurtband und ein Verfahren zur dessen Herstellung, bei dem ein monofiler Schussfaden für das Sicherheitsgurtband verwendet wird.

Ein weiteres Verfahren zum Herstellen von Sicherheitsgurtbändern sowie ein entsprechendes Sicherheitsgurtband ist in der DE 10 2009 002 869 A1 beschrieben.

Diese bekannten Sicherheitsgurtbänder haben teilweise den Nachteil, dass sie aufgrund von Reibung wellig werden können.

Sicherheitsgurtbänder mit sogenannten Hohlkanten sind in der DE 27 19 382 A1, DE 29 25 413 A1, DE 29 45 078 A1 oder EP 0 021 104 A1 beschrieben. Einen ähnlichen Stand der Technik zeigt außerdem die DE 33 45 508 C2.

Diese bekannten Sicherheitsgurtbänder mit Hohlkanten haben jedoch den Nachteil, dass die Herstellung einer solchen Hohlkante recht aufwändig ist, weshalb die Produktionskosten dieser bekannten Sicherheitsgurtbänder vergleichsweise hoch sind. Um die gewünschten Anforderungen an die Weichheit und insbesondere an die Scheuerfestigkeit des Kantenbereichs dieser Sicherheitsgurtbänder zu erfüllen, werden dieselben außerdem teilweise mit verschiedenen Additiven wie Polyacrylaten, Polyethylenen, Silikonen oder ähnlichem behandelt, was die Herstellungskosten weiter erhöht.

Die DE 25 08 732 A1 beschreibt ein Gurtband für Sicherheitsgurte für Fahrzeuge. An mindestens einer Kante des Gurtbandes ist ein Schlauch vorgesehen, der als Schlauchgewebe ausgebildet ist, das mit dem Gurtband gemeinsame Schussfäden hat. Das Schlauchgewebe weist eine Bindung auf, bei der eine 3/1-Köperbindung mit einer 1/3-Köperbindung abwechselt.

Es ist daher Aufgabe der vorliegenden Erfindung, ein Sicherheitsgurtband für ein Sicherheitsgurtsystem eines Kraftfahrzeugs zu schaffen, das eine höhere Lebensdauer in Bezug auf die Scheuerfestigkeit aufweist.

Erfindungsgemäß wird diese Aufgabe durch die in Anspruch 1 genannten Merkmale gelöst.

Durch die Verwendung einer 1/2-Köperbindung und einer 2/1-Köperbindung, also einer dreibindigen Köperbindung, für das Gewebe des erfindungsgemäßen Sicherheitsgurtbands wird gegenüber der Verwendung einer 2/2-Köperbindung, also einer vierbindigen Köperbindung, die Anzahl der Anbindungspunkte innerhalb des Gewebes und damit dessen Festigkeit deutlich erhöht. Dadurch kann ein verbessertes Reibungsverhalten, eine bessere Scheuerbeständigkeit und damit eine geringere Neigung zur Welligkeit und Blasigkeit des erfindungsgemäßen Sicherheitsgurtbands erreicht werden, was zu einer erhöhten Lebensdauer desselben und damit zu einer geringeren Anzahl an zu erwartenden Reklamationen führt. Auch die Neigung zu Verwerfungen verringert sich durch die verbesserte Scheuerfestigkeit des Gewebes deutlich.

Durch die verbesserte Verschleißfestigkeit werden darüber hinaus mögliche Beschädigungen des erfindungsgemäßen Sicherheitsgurtbands erheblich reduziert, was zu einer erhöhten Lebensdauer führt, die eine Grundforderung bei der Auslegung von Sicherheitsgurtbändern darstellt.

Zum Erreichen eines Sicherheitsgurtbands mit denselben Eigenschaften wie diejenigen eines aus dem Stand der Technik bekannten Sicherheitsgurtbands kann jedoch auch eine geringere Anzahl an Schussfäden eingesetzt werden, so dass sich das Sicherheitsgurtband mit derselben Qualität wie bekannte Sicherheitsgurtbänder, jedoch mit einem geringeren Gewicht und, unter anderem durch die Einsparung von Lohn- und Materialkosten, mit geringeren Kosten herstellen lässt.

Um auf beiden Seiten des erfindungsgemäßen Sicherheitsgurtbands eine ähnlich hohe Scheuerfestigkeit zu erreichen, kann erfindungsgemäß vorgesehen sein, dass zumindest in einem mittleren Bereich des Sicherheitsgurtbands abwechselnd eine 1/2-Köperbindung und eine 2/1-Köperbindung vorgesehen ist.

Es ist besonders vorteilhaft, wenn über die gesamte Breite des Sicherheitsgurtbands abwechselnd eine 1/2-Köperbindung und eine 2/1-Köperbindung vorgesehen ist, da auf diese Weise das gesamte Sicherheitsgurtband die oben erwähnten Vorteile aufweist.

Da an Sicherheitsgurtbänder für Sicherheitsgurtsysteme aufgrund deren unmittelbaren Sichtbarkeit innerhalb des Kraftfahrzeugs auch besondere ästhetische Anforderungen gestellt werden, ist es besonders vorteilhaft, wenn sich die 1/2-Köperbindung und die 2/1-Köperbindung nach einer bestimmten Anzahl an Rapporten abwechseln. Auf diese Weise können über die Breite des Sicherheitsgurtbands die von der Fahrzeugindustrie gestellten Anforderungen an die optischen Eigenschaften des Sicherheitsgurtbands auf die gewünschte Art und Weise erfüllt werden, wobei sichergestellt ist, dass beide Seiten des Sicherheitsgurtbands im Wesentlichen dieselben technischen Eigenschaften, insbesondere hinsichtlich der Scheuerfestigkeit, aufweisen.

Wenn sich die 1/2-Köperbindung und die 2/1-Köperbindung nach jedem Rapport abwechseln, so ergibt sich eine besonders hohe Scheuerfestigkeit und Gleichmäßigkeit über die Breite des Sicherheitsgurtbands.

Hierbei ist es als besonders vorteilhaft anzusehen, wenn jeder Rapport wenigstens drei Kettfäden aufweist.

In einer weiteren sehr vorteilhaften Ausgestaltung der Erfindung kann außerdem vorgesehen sein, dass sich die 1/2-Köperbindung und die 2/1-Köperbindung nach jedem Kettfaden abwechseln. Mit einer solchen Ausführungsform kann eine hohe Symmetrie und eine gute Scheuerfestigkeit erreicht werden.

Hierbei ist es als besonders vorteilhaft anzusehen, wenn jeder Rapport wenigstens sechs Kettfäden aufweist.

Um zusätzlichen Einfluss auf die Optik des erfindungsgemäßen Sicherheitsgurtbands nehmen zu können, kann in einer vorteilhaften Ausführungsform der Erfindung des Weiteren vorgesehen sein, dass die Bindung derart ausgeführt ist, dass nach einer bestimmten Anzahl an Rapporten der Verlauf des Köpergrats wechselt.

Zusätzlich zu der oben ausführlich beschriebenen Änderung der Bindung der Kettfäden kann auch vorgesehen sein, dass sich die Bindung der Schussfäden in Längsrichtung des Sicherheitsgurtbands in bestimmten Abständen ändert. Durch eine solche Vorgehensweise lassen sich annähernd beliebige Eigenschaften hinsichtlich der Optik der Oberfläche und der Scheuerfestigkeit des Sicherheitsgurtbands erreichen.

Eine weitere sehr vorteilhafte Ausgestaltung der Erfindung kann darin bestehen, dass das Sicherheitsgurtband senkrecht zu seiner Längsrichtung einen mittleren Bereich und zwei außenliegende Kantenbereiche aufweist, wobei wenigstens einer der Kantenbereiche mit einer 1/2-Köperbindung und einer 2/1-Köperbindung gewebt ist.

Durch die Verwendung einer 1/2-Köperbindung und einer 2/1-Köperbindung, also einer dreibindigen Köperbindung, in wenigstens einem der Kantenbereiche des erfindungsgemäßen Sicherheitsgurtbands wird gegenüber der Verwendung einer 2/2-Köperbindung oder einer 1/1-Hohlbindung, also einer vierbindigen Bindung, die Anzahl der Anbindungspunkte innerhalb des Gewebes und damit dessen Festigkeit deutlich erhöht. Dadurch kann in dem betreffenden Kantenbereich eine bessere Scheuerbeständigkeit und damit eine geringere Neigung zu Filamentbrüchen erreicht werden, was zu einer erhöhten Lebensdauer des erfindungsgemäßen Sicherheitsgurtbands und damit zu einer geringeren Anzahl an zu erwartenden Reklamationen führt. In Praxistests hat sich herausgestellt, dass die erfindungsgemäße Ausführung des Kantenbereichs zu einer erheblichen Verbesserung der Scheuerbeständigkeit desselben beiträgt.

Diese qualitative Verbesserung des Kantenbereichs des Sicherheitsgurtbands lässt sich vorteilhafterweise sogar mit einem geringeren Aufwand als bei bekannten, hochwertigen Lösungen realisieren, so dass in derselben Zeit eine größere Menge des erfindungsgemäßen Sicherheitsgurtbands hergestellt werden kann, als dies bei diesen bekannten, hochwertigen Lösungen der Fall ist. Dadurch kann das erfindungsgemäße Sicherheitsgurtband kostengünstiger als diese bekannten, hochwertigen Sicherheitsgurtbänder hergestellt werden. Das erfindungsgemäße Sicherheitsgurtband kann also zumindest gegenüber hochwertigen Lösungen zu einem günstigeren Preis und in einer höheren Qualität ausgeführt werden.

In einer vorteilhaften Weiterbildung der Erfindung kann vorgesehen sein, dass der mittlere Bereich des Sicherheitsgurtbands mit einer von einer 1/2-Köperbindung und einer 2/1-Köperbindung unterschiedlichen Bindung gewebt ist. Bei dieser Ausführungsform spielt die im mittleren Bereich des Gewebes des Sicherheitsgurtbands eingesetzte Bindungsart eine untergeordnete Rolle, was dann von besonderem Vorteil ist, wenn beispielsweise von einem Automobilhersteller eine bestimmte Bindungsart gewünscht wird.

Des Weiteren kann vorgesehen sein, wenn der mittlere Bereich des Sicherheitsgurtbands mit einer 2/2-Köperbindung gewebt ist. Eine solche 2/2-Köperbindung stellt eine bei vielen Automobilherstellern vorgeschriebene und daher bei Sicherheitsgurtbändern für Sicherheitsgurtsysteme weit verbreitete Bindungsart dar. Es ist als sehr vorteilhaft herauszuheben, dass diese Bindungsart problemlos mit der erfindungsgemäß im Kantenbereich eingesetzten Bindungsart kombiniert werden kann.

Eine sehr vorteilhafte Ausgestaltung der Erfindung kann darin bestehen, dass der wenigstens eine Kantenbereich senkrecht zu der Längsrichtung des Sicherheitsgurtbands einen inneren Abschnitt und einen äußeren Abschnitt aufweist, dass das Gewebe zwei jeweils gleichzeitig eingebrachte Schussfäden aufweist, dass einer der jeweiligen Schussfäden sowohl durch den inneren Abschnitt als auch durch den äußeren Abschnitt verläuft, und dass der andere der jeweiligen Schussfäden nur durch den inneren Abschnitt und nicht durch den äußeren Abschnitt verläuft. Durch die erfindungsgemäße Verwendung zweier Schussfäden, von denen nur einer durch den äußeren Abschnitt des wenigstens einen Kantenbereichs verläuft, ergibt sich in diesem äußeren Abschnitt ein geringeres Verhältnis von Schussfäden zu Kettfäden und damit auch eine geringere Anzahl an Anbindungspunkten, wodurch sich eine sehr gute Weichheit des auf diese Weise ausgeführten Kantenbereichs ergibt. Diese verbesserte Weichheit des Kantenbereichs führt zu einem sehr guten Tragekomfort des erfindungsgemäßen Sicherheitsgurtbands, der sogar über den bekannten, eine Hohlkante verwendenden Lösungen liegen kann. Besonders hervorzuheben ist dabei der im Vergleich zu bekannten, hochwertigen Lösungen sehr viel geringere Fertigungsaufwand.

In einer sehr einfach zu realisierenden Ausführungsform der Erfindung kann vorgesehen sein, dass die beiden gleichzeitig eingebrachten Schussfäden wenigstens annähernd dieselbe Garnfeinheit aufweisen.

Alternativ ist es jedoch auch möglich, dass der sowohl durch den inneren Abschnitt als auch durch den äußeren Abschnitt verlaufende Schussfaden eine geringere Garnfeinheit aufweist als der nur durch den inneren Abschnitt und nicht durch den äußeren Abschnitt verlaufende Schussfaden. Durch die Verwendung einer geringeren Garnfeinheit des sowohl durch den inneren als auch durch den äußeren Abschnitt verlaufenden Schussfadens kann die Weichheit des äußeren Abschnitts des Kantenbereichs noch weiter erhöht werden. Hierbei sind grundsätzlich beliebige Kombinationen möglich, so dass den unterschiedlichsten Anforderungen seitens der Hersteller bzw. Verwender von Sicherheitsgurtsystemen entsprochen werden kann.

Um die technischen Eigenschaften des Sicherheitsgurtbands zu beeinflussen, kann des Weiteren vorgesehen sein, dass die Schussfäden aus Materialien mit unterschiedlichen Eigenschaften bestehen.

Um die Weichheit des Kantenbereichs noch weiter zu erhöhen, kann in einer weiteren vorteilhaften Ausgestaltung der Erfindung vorgesehen sein, dass die Kettfäden in wenigstens einem der Kantenbereiche eine geringere Garnfeinheit aufweisen als die Kettfäden in dem mittleren Bereich.

In diesem Zusammenhang ist es hinsichtlich der Weichheit des Kantenbereichs des erfindungsgemäßen Sicherheitsgurtbands besonders vorteilhaft, wenn die Garnfeinheit der Kettfäden in wenigstens einem der Kantenbereiche um mindestens das Zweifache geringer ist als die Garnfeinheit der Kettfäden in dem mittleren Bereich.

Eine weitere vorteilhafte Ausgestaltung der Erfindung kann darin bestehen, dass über die Breite des wenigstens einen Kantenbereichs abwechselnd eine 1/2-Köperbindung und eine 2/1-Köperbindung vorgesehen ist. Durch eine solche Abwechslung der 1/2- mit der 2/1-Köperbindung ergibt sich an beiden Kantenbereichen des erfindungsgemäßen Sicherheitsgurtbands eine ähnlich hohe Scheuerfestigkeit.

Insbesondere kann vorgesehen sein, dass sich die 1/2-Köperbindung und die 2/1-Köperbindung nach jedem Kettfaden abwechseln. Eine solche Abwechslung der 1/2- mit der 2/1-Köperbindung nach jedem Kettfaden führt zu einer besonders hohen Symmetrie des auf diese Weise ausgeführten Kantenbereichs.

Ein Verfahren zur Herstellung eines erfindungsgemäßen Sicherheitsgurtbands ergibt sich aus den Merkmalen von Anspruch 22.

Mit diesem Verfahren lässt sich das erfindungsgemäße Sicherheitsgurtband auf besonders einfache, effektive und kostengünstige Art und Weise herstellen, wobei die oben beschriebenen Vorteile erreicht werden.

Nachfolgend sind Ausführungsbeispiele der Erfindung anhand der Zeichnung prinzipmäßig dargestellt.

Es zeigt:
- Fig. 1: eine schematische Darstellung eines Sicherheitsgurtbands;
- Fig. 2: eine Bindungspatrone einer ersten Ausführungsform eines Sicherheitsgurtbands;
- Fig. 3: eine Bindungspatrone einer weiteren Ausführungsform eines Sicherheitsgurtbands;
- Fig. 4: eine Bindungspatrone einer weiteren Ausführungsform eines Sicherheitsgurtbands;
- Fig. 5: eine Bindungspatrone einer weiteren Ausführungsform eines Sicherheitsgurtbands;
- Fig. 6: eine Bindungspatrone einer weiteren Ausführungsform des erfindungsgemäßen Sicherheitsgurtbands;
- Fig. 7: eine Bindungspatrone einer weiteren Ausführungsform des erfindungsgemäßen Sicherheitsgurtbands; und
- Fig. 8: eine schematische Darstellung des Sicherheitsgurtbands aus Fig. 7.

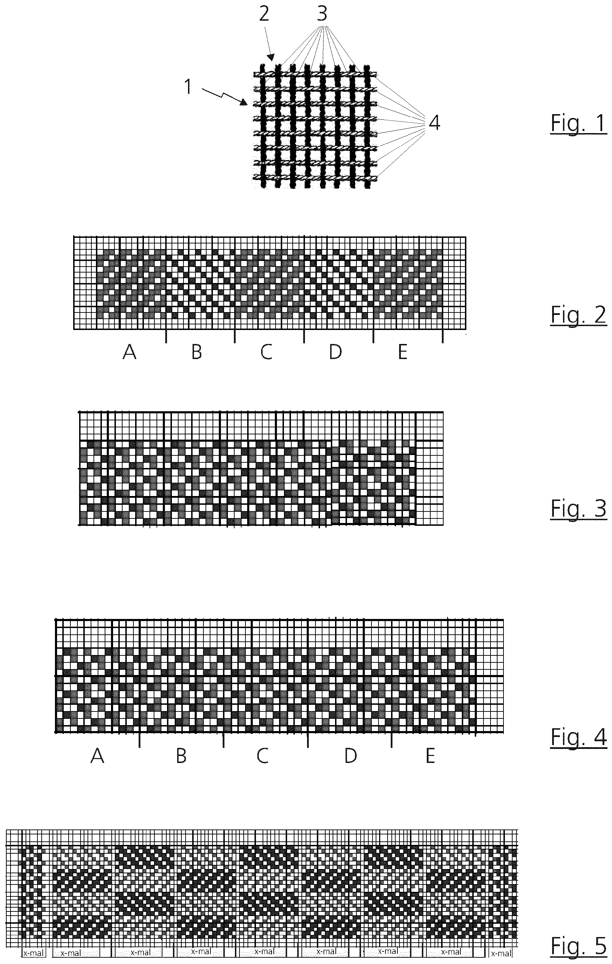

Fig. 1 zeigt in einer sehr schematischen Ansicht ein Sicherheitsgurtband 1 für ein in seiner Gesamtheit nicht dargestelltes Sicherheitsgurtsystem, das zum Beispiel für ein Kraftfahrzeug geeignet ist. Das Sicherheitsgurtband 1 weist ein Gewebe 2 auf, das in an sich bekannter Weise aus Kettfäden 3 und Schussfäden 4 besteht, die im vorliegenden Fall nur beispielhaft in einer Leinwandbindung gebunden sind. Im Prinzip handelt es sich bei den Schussfäden 4 um wenigstens einen Schussfaden, der am Rand des Gewebes 2 jeweils seine Richtung wechselt. Dennoch wird, wie dies bei Geweben üblich ist, nachfolgend von den Schussfäden 4 gesprochen.

In den Figuren 2, 3, 4 und 5 sind sogenannte Bindungspatronen dargestellt, mit denen die Bindung des Gewebes 2 des Sicherheitsgurtbands 1 verdeutlicht wird. In üblicher Weise bedeutet dabei ein ausgefülltes Kästchen, dass der Kettfaden 3 über den Schussfaden 4 gehoben ist, wohingegen ein nicht ausgefülltes Kästchen bedeutet, dass der Kettfaden 3 unter dem Schussfaden 4 liegt. Die Umsetzung dieser Bindungspatronen in eine Steuerung der Webmaschine kann in üblicher Weise erfolgen und wird daher hierin nicht näher beschrieben.

Sämtlichen in den Figuren 2 - 5 dargestellten Sicherheitsgurtbändern 1 ist gemeinsam, dass sie abwechselnd mit einer 1/2-Köperbindung und einer 2/1-Köperbindung gewebt sind. Gerade diese Ausführungen des Sicherheitsgurtbands 1 bringen die oben erwähnten Vorteile hinsichtlich des verbesserten Reibungsverhaltens, der besseren Scheuerbeständigkeit und der geringeren Neigung zur Welligkeit und Blasigkeit mit sich. Dadurch lässt sich eine erhöhte Lebensdauer des Sicherheitsgurtbands 1 erreichen. Außerdem können durch die möglicherweise einfachere Herstellung Material- und Fertigungskosten eingespart werden.

Bei dem in Fig. 2 dargestellten Ausführungsbeispiel einer ersten Ausführungsform des Sicherheitsgurtbands 1 wechseln sich die 1/2-Köperbindung und die 2/1-Köperbindung nach einer bestimmten Anzahl an Rapporten, im vorliegenden Fall nach vier Rapporten, ab. Wie bekannt ist, ist unter einem Rapport die kleinste Einheit zu verstehen, nach der sich das Bindungsbild des Gewebes wiederholt bzw. die kleinste Anzahl an Kett- und Schussfäden, nach der sich die Bindung wiederholt. In dem in Fig. 2 dargestellten Ausführungsbeispiel weist jeder Rapport drei Kettfäden 3 auf. Nach den ersten zwölf Kettfäden 3, also nach vier Rapporten, wechselt die Bindung von einer 2/1-Köperbindung zu einer 1/2-Köperbindung. Somit sind in dem mit "A" bezeichneten Bereich, in dem das Gewebe 2 die 2/1-Köperbindung aufweist, mehr Kettfäden 3 an der Oberfläche des Sicherheitsgurtbands 1 vorhanden als in dem sich an den Bereich "A" anschließenden Bereich "B", in dem eine 1/2-Köperbindung vorgesehen ist. Insgesamt sind im vorliegenden Fall fünf Bereiche A, B, C, D und E vorgesehen, wobei in den Bereichen A, C und E eine 2/1-Köperbindung und in den Bereichen B und D eine 1/2-Köperbindung vorgesehen ist. Diese Ausführungsform führt zu in Längsrichtung über das Sicherheitsgurtband 1 verlaufenden Streifen, wodurch dem Sicherheitsgurtband 1 ein Design verliehen werden kann, das dem Design bekannter Sicherheitsgurtbänder für Sicherheitsgurtsysteme stark ähnelt, die jedoch mit einer 2/2-Köperbindung gewebt sind. Dadurch lässt sich eine höhere Akzeptanz für das Sicherheitsgurtband 1 erreichen.

Im vorliegenden Fall sind über die Breite des Sicherheitsgurtbands 1 also fünf Streifen vorhanden, wobei im vorliegenden Fall die Anzahl der in 1/2-Köperbindung bindenden Kettfäden 3 kleiner ist als die Anzahl der in 2/1-Köperbindung bindenden Kettfäden 3. Selbstverständlich könnte über die Breite des Sicherheitsgurtbands 1 auch eine andere Anzahl an Streifen und/oder eine andere Breite der Streifen vorgesehen sein. Dabei könnte auch eine Ausführungsform vorgesehen sein, bei der über die Breite des Sicherheitsgurtbands 1 die Anzahl der in 1/2-Köperbindung bindenden Kettfäden 3 der Anzahl der in 2/1-Köperbindung bindenden Kettfäden 3 entspricht.

In einer nicht dargestellten Ausführungsform wäre es auch möglich, dass sich die 1/2-Köperbindung und die 2/1-Köperbindung nach jedem Rapport, also der kleinsten Anzahl an Kett- und Schussfäden, nach der sich die Bindung wiederholt, abwechseln.

Bei der in Fig. 3 dargestellten Ausführungsform einer beispielhaften Bindungspatrone für das Gewebe 2 des Sicherheitsgurtbands 1 wechseln sich die 1/2-Köperbindung und die 2/1-Köperbindung nach jedem einzelnen Kettfaden 3 ab. So ist vom linken Rand aus betrachtet der erste Kettfaden 3 in einer 2/1-Köperbindung und der zweite Kettfaden 3 in einer 1/2-Köperbindung gebunden. Der dritte Kettfaden 3 ist dann wieder in einer 2/1-Köperbindung und der vierte Kettfaden 3 in einer 1/2-Köperbindung gebunden, was sich über die Breite des Sicherheitsgurtbands 1 fortsetzt. Dabei ist zu erkennen, dass der Rapport in diesem Fall sechs Kettfäden 3 aufweist, d. h. dass sich die Bindung nach sechs Kettfäden 3 wiederholt. Durch diese häufige Änderung der Bindungsart erhält das gemäß der in Fig. 3 dargestellten Bindungspatrone hergestellte Gewebe 2 eine sehr gleichmäßige Oberfläche, die auf beiden Seiten des Sicherheitsgurtbands 1 im Wesentlichen gleich ist. Dabei entspricht vorzugsweise über die Breite des Sicherheitsgurtbands 1 die Anzahl der in 1/2-Köperbindung bindenden Kettfäden 3 im Wesentlichen der Anzahl der in 2/1-Köperbindung bindenden Kettfäden 3, wodurch beide Seiten des Sicherheitsgurtbands 1 im Wesentlichen dieselben technischen Eigenschaften aufweisen.

Eine zu der Bindungspatrone von Fig. 3 sehr ähnliche Bindungspatrone zeigt Fig. 4. Hierbei wechseln sich ebenfalls nach jedem Kettfaden 3 die 1/2-Köperbindung und die 2/1-Köperbindung ab. Während das Sicherheitsgurtband 1 gemäß Fig. 3 jedoch in Längsrichtung keine Streifen aufweist, wird durch eine Änderung bzw. einen Wechsel des Köpergrats eine bestimmte Streifigkeit des Gewebes 2 erreicht. Auch hier sind die über die Breite des Sicherheitsgurtbands 1 verlaufenden Streifen mit A, B, C, D und E bezeichnet, wobei die Streifen A, C und E einen sogenannten Z-Köpergrat und die Streifen B und D einen S-Köpergrat aufweisen. Diese Änderung des Verlaufs des Köpergrats wird durch die Versetzung des jeweils ersten Kettfadens 3 der Streifen B und D um zwei Schussfäden 4 nach unten erreicht. Der nächste Kettfaden 3, also der zweite Kettfaden 3 in dem Streifen "B" schließt sich dann in üblicher Weise so an, dass zwei benachbarte Kettfäden 3 nicht gleich binden. Vorteilhaft ist es auch, wenn der nachfolgende Kettfaden 3 "richtig" angesetzt wird, um eine möglich feste Bindung zu erreichen.

Bei der in Fig. 5 dargestellten Bindungspatrone der vierten Ausführungsform des Sicherheitsgurtbands 1 ändert sich zusätzlich zu der Bindung der Kettfäden 3 auch die Bindung der Schussfäden 4 in Längsrichtung des Gewebes 2. Während sich die Bindungsart dabei nach insgesamt fünf Rapporten und damit bei drei Kettfäden 3 pro Rapport und nach fünfzehn Kettfäden 3 ändert, ändert sich die Bindung der Schussfäden 4 nach insgesamt sechs Schussfäden 4. Dadurch erhält das Sicherheitsgurtband 1 ein Karomuster. Selbstverständlich wäre ein solches Karomuster des Sicherheitsgurtbands 1 auch in anderen Größen möglich, wenn vorgesehen ist, dass sich die Bindungsart nach einer anderen Anzahl an Kettfäden 3 und/ oder Schussfäden 4 ändert. Bei der in Fig. 5 dargestellten Bindungspatrone wurde zwischen Teilrapporten zur besseren Darstellung jeweils eine Leerspalte eingesetzt. Des Weiteren ist in Fig. 5 zu erkennen, dass die Kantenbereiche des Sicherheitsgurtbands 1 anders als der mittlere Bereich desselben ausgeführt sind, nämlich mit der oben zum Beispiel unter Bezugnahme auf Fig. 2 erläuterten, sich abwechselnden 1/2- und 2/1-Köperbindung.

Durch andere Kombinationen der 1/2-Köperbindung mit der 2/1-Köperbindung über die Breite und die Länge des Sicherheitsgurtbands 1 lassen sich also die unterschiedlichsten Designs erreichen.

Bei sämtlichen hierin beschriebenen Ausführungsformen ist ein Kettfaden 3 zu dem jeweils benachbarten Kettfaden 3 in der Höhe versetzt, um den schräg verlaufenden Grat zu erreichen.

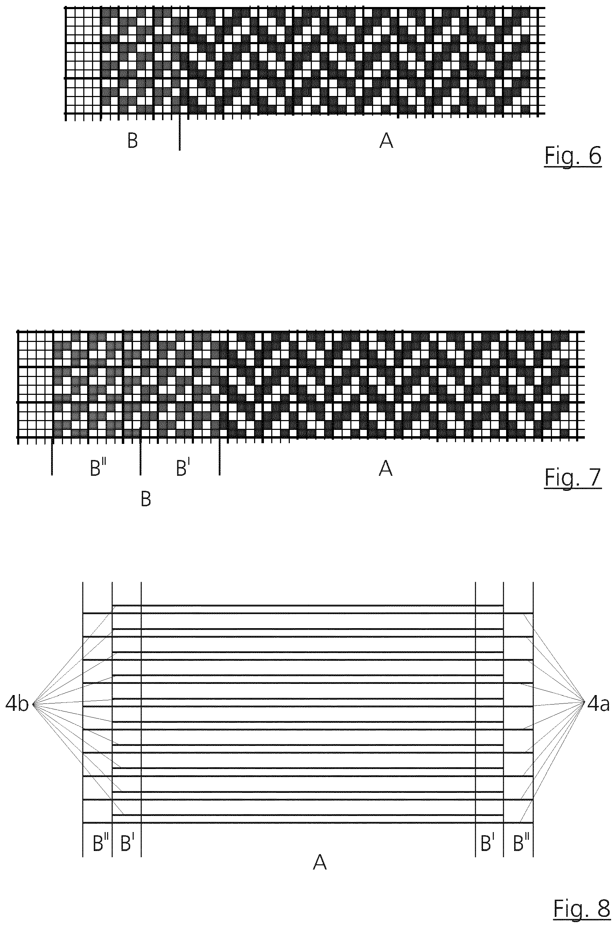

Die Figuren 6, 7 und 8 zeigen verschiedene Ausführungsformen des erfindungsgemäßen Sicherheitsgurtbands 1 anhand zweier Bindungspatronen und einer sehr schematischen Darstellung.

Bei der Bindungspatrone von Fig. 6 ist das Sicherheitsgurtband 1 in einen mittleren Bereich A und in zwei sich seitlich an den mittleren Bereich A anschließende Kantenbereiche B unterteilt. Zur Verbesserung der Übersichtlichkeit ist in den Figuren 6 und 7 das Sicherheitsgurtband 1 nicht über seine gesamte Breite dargestellt, sodass nur einer der Kantenbereiche B, nämlich der sich auf der linken Seite des Sicherheitsgurtbands 1 befindliche Kantenbereich B, zu erkennen ist. Der andere, sich auf der rechten Seite des Sicherheitsgurtbands 1 befindliche Kantenbereich kann grundsätzlich identisch zu dem dargestellten Kantenbereich B ausgeführt sein. Des Weiteren sollte, da das Sicherheitsgurtband 1 nur über einen kurzen Abschnitt seiner Länge dargestellt ist, bemerkt werden, dass das Sicherheitsgurtband 1 vorzugsweise über seine gesamte Länge analog zu dem in Fig. 6 dargestellten Abschnitt desselben ausgeführt ist.

In Fig. 6 ist erkennbar, dass der Kantenbereich B mit einer 1/2-Köperbindung und einer 2/1-Köperbindung gewebt ist. Vorzugsweise sind die beiden Kantenbereiche B identisch zueinander ausgeführt, da auf diese Weise die oben angeführten Vorteile am besten zum Tragen kommen. Grundsätzlich ist es jedoch auch möglich, lediglich einen der Kantenbereiche B mit der 1/2-Köperbindung und der 2/1-Köperbindung und den anderen Kantenbereich auf eine andere Weise zu gestalten.

Aus Fig. 6 geht des Weiteren hervor, dass über die Breite des Kantenbereichs B abwechselnd die 1/2- und die 2/1-Köperbindung vorgesehen ist. Im vorliegenden Fall wechseln sich die 1/2- und die 2/1-Köperbindung nach jedem Kettfaden 3 ab, was zu einem sehr gleichmäßigen Erscheinungsbild und einer sehr gleichmäßigen Oberfläche des Sicherheitsgurtbands 1 führt. Theoretisch wäre es jedoch auch möglich, mehrere benachbarte Kettfäden 3 in der 1/2-Köperbindung und anschließend mehrere benachbarte Kettfäden 3 in der 2/1-Köperbindung abzubinden.

In Fig. 6 ist des Weiteren zu erkennen, dass der mittlere Bereich A des Gewebes 2 mit einer 2/2-Köperbindung gewebt ist. Grundsätzlich wäre es auch möglich, den mittleren Bereich A des Gewebes 2 mit einer anderen, von einer 1/2-Köperbindung und einer 2/1-Köperbindung unterschiedlichen Bindung zu weben, wie zum Beispiel mit einer Leinwandbindung.

Während bei der Ausführungsform von Fig. 6 die beiden Kantenbereiche B senkrecht zu der Längsrichtung des Sicherheitsgurtbands 1 lediglich einen Abschnitt aufweisen, der mit einer 1/2-Köperbindung und einer 2/1-Köperbindung gewebt ist, weisen die Kantenbereiche B gemäß der Ausführungsform von Fig. 7 senkrecht zu der Längsrichtung des Sicherheitsgurtbands 1 jeweils einen inneren Abschnitt B' und einen äußeren Abschnitt B" auf. In beiden Abschnitten B' und B" des Kantenbereichs B ist wiederum die 1/2- und die 2/1-Köperbindung vorgesehen, die sich wiederum vorzugsweise nach jedem Kettfaden 3 abwechseln. Wie aus der stark schematisierten Darstellung von Fig. 8, in der die Kettfäden 3 der Einfachheit halber nicht dargestellt sind, hervorgeht, weist das Gewebe 2 jedoch zwei jeweils gleichzeitig, d. h. mit zwei nicht dargestellten Schussnadeln eingebrachte Schussfäden 4a und 4b auf, die den einen Schussfaden 4 gemäß der Ausführungsform von Fig. 6 ersetzen. Für den mittleren Bereich A des Gewebes 1 hat dies keinerlei Auswirkungen, insbesondere können mit den beiden Schussfäden 4a und 4b dieselbe Festigkeit erreicht werden wie mit dem einen Schussfaden 4. Hinsichtlich der Kantenbereiche B ist jedoch vorgesehen, dass einer der beiden Schussfäden, im vorliegenden Fall der Schussfaden 4a, sowohl durch den inneren Abschnitt B' als auch durch den äußeren Abschnitt B" verläuft, wohingegen der andere Schussfaden 4b nur durch den inneren Abschnitt B' und nicht durch den äußeren Abschnitt B" verläuft. Dies verringert den Schussanteil in dem äußeren Abschnitt B", wodurch das Gewebe 2 in dem äußeren Abschnitt B" bzw. in den äußeren Abschnitten B", also den Endbereichen der beiden Kantenbereiche B, erheblich weicher ist als in dem mittleren Bereich A und auch weicher als in den inneren Abschnitten B' der Kantenbereiche B. Mit anderen Worten ergibt sich durch dieses Verhältnis aus Schussfäden 4 und Kettfäden 3 in den äußeren Abschnitten B" eine geringere Härte des Gewebes 2 in diesem Bereich.

Die beiden Schussfäden 4a und 4b können mit den beiden Schussnadeln gleichzeitig parallel von einer Seite des Sicherheitsgurtbands 1 eingebracht werden. Alternativ ist es möglich, die beiden Schussfäden 4a und 4b von zwei unterschiedlichen Seiten gleichzeitig mit zwei gegenläufig arbeitenden Schussnadeln einzubringen.

Des Weiteren kann vorgesehen sein, dass die beiden gleichzeitig eingebrachten Schussfäden 4a und 4b wenigstens annähernd dieselbe Garnfeinheit aufweisen. Es ist jedoch auch möglich, den über die gesamte Breite des Gewebes 2 verlaufenden Schussfaden 4a mit einer geringeren Garnfeinheit auszuführen als den ausschließlich durch den inneren Abschnitt B' und nicht durch den äußeren Abschnitt B" verlaufenden Schussfaden 4b. Gegebenenfalls ist es auch möglich, den über die gesamte Breite des Gewebes 2 verlaufenden Schussfaden 4a mit einer höheren Garnfeinheit auszuführen als den ausschließlich durch den inneren Abschnitt B' und nicht durch den äußeren Abschnitt B" verlaufenden Schussfaden 4b.

Rein beispielhaft kann ausgeführt werden, dass bei einer angenommenen Garnfeinheit des Schussfadens 4 gemäß Fig. 6 von 1.100 dtex die beiden Schussfäden 4a und 4b gemäß der Figuren 7 und 8 eine Garnfeinheit von jeweils 550 dtex aufweisen können. Alternativ ist es möglich, beispielsweise den Schussfaden 4a mit 400 dtex und den Schussfaden 4b mit 700 dtex auszuführen. Allerdings sind auch vollkommen andere Kombinationen der Garnfeinheiten der beiden Schussfäden 4a und 4b möglich.

Die Garnfeinheit der beiden Schussfäden 4a und 4b ist also vorzugsweise so ausgewählt, dass ihre Addition die Gesamtfeinheit des ansonsten eingesetzten einen Schussfadens 4 ergibt, sodass sich keinerlei Einschränkungen im Hinblick auf die Festigkeit des Sicherheitsgurtbands 1 ergeben.

Mit der Ausnahme, dass zum Eintragen der beiden Schussfäden 4a und 4b zwei Schussnadeln erforderlich sind, spielt es für das Gewebe 2 keine Rolle, ob der eine Schussfaden 4 oder die beiden Schussfäden 4a und 4b vorgesehen sind, wenn die Garnfeinheit derselben so ausgewählt ist, dass die Summe der Garnfeinheiten der Schussfäden 4a und 4b gemäß der Figuren 7 und 8 der Garnfeinheit des Schussfadens 4 gemäß Fig. 6 entspricht.

Die beiden Schussfäden 4a und 4b können aus demselben Material bestehen. Es ist jedoch auch möglich, für die Schussfäden 4a und 4b Materialien mit unterschiedlichen Eigenschaften zu verwenden.

In einer nicht dargestellten Ausführungsform ist es möglich, zum Beispiel für den Schussfaden 4a ein Garn zu verwenden, welches bei Wärme schrumpft und auf die diese Weise den Kantenbereich B stärker an den mittleren Bereich A des Gewebes 2 heranzieht.

Bei den Ausführungsformen des Sicherheitsgurtbands 1 gemäß den Figuren 6, 7 und 8 sind also die Kantenbereiche B unterschiedlich zu den dem mittleren Bereich A ausgeführt, wodurch die Kantenbereiche B andere Eigenschaften als der mittlere Bereich A erhalten.

Bei beiden Ausführungsformen des Gewebes 2 gemäß Fig. 6 bzw. gemäß der Figuren 7 und 8 können die Kettfäden 3 in wenigstens einem der Kantenbereiche B eine geringere Garnfeinheit aufweisen als die Kettfäden 3 in dem mittleren Bereich A. Dadurch wird eine zusätzliche Weichheit der Kantenbereiche B erzielt. Insbesondere ist es in diesem Zusammenhang möglich, dass die Garnfeinheit der Kettfäden 3 in wenigstens einem der Kantenbereiche B um mindestens das Zweifache geringer ist als die Garnfeinheit der Kettfäden 3 in dem mittleren Bereich A. Beispielsweise können die Kettfäden 3 in dem mittleren Bereich A mit einer Garnfeinheit von 1.100 dtex oder 1.670 dtex und die Kettfäden 3 in den Kantenbereichen B mit einer Garnfeinheit von 550 dtex ausgeführt werden. Bei der Auswahl der Kettfäden 3 in den Kantenbereichen B können auch technische Eigenschaften des Garns, wie zum Beispiel Dehnung, Bruchlast, Filamentzahl, Drehung pro Meter und Schrumpfverhalten bei Hitze berücksichtigt werden. In diesem Fall ist es auch möglich, in einem der Kantenbereiche B oder in beiden Kantenbereichen B eine größere Anzahl an Fäden einzusetzen als in dem mittleren Bereich A. Dadurch kann möglicherweise eine bessere Reibechtheit und/oder eine höhere Scheuerbeständigkeit erreicht werden. Durch die Verwendung einer größeren Anzahl an feineren Garnen im Vergleich zu einer kleineren Anzahl an stärkeren Garnen kann die Anzahl der Abbindungspunkte erhöht werden.

Auch der Einsatz von Materialien mit anderen Dehnungseigenschaften in einem der Kantenbereiche B oder in beiden Kantenbereichen B, insbesondere einer höheren Dehnung als in dem mittleren Bereich A, ist denkbar. Durch diese unterschiedlichen Garnfeinheiten und/oder Materialien in den Kantenbereichen B kann der Tatsache Rechnung getragen werden, dass es in den Kantenbereichen B je nach Anwendungsfall möglicherweise nicht auf eine höhere Bruchlast, sondern eben auf bessere Reibeigenschaften ankommt.

Die Breite der beiden Kantenbereiche B kann in sämtlichen in den Figuren 6, 7 und 8 dargestellten Ausführungsformen ca. 1 bis 4 mm betragen. In dem in Fig. 6 dargestellten Ausführungsbeispiel umfasst der Kantenbereich B neun Kettfäden 3, wohingegen in dem in Fig. 7 dargestellten Ausführungsbeispiel der innere Abschnitt B' neun und der äußere Abschnitt B" des Kantenbereichs B zehn Kettfäden 3 umfasst. Diese Angaben sind jedoch als rein beispielhaft anzusehen und können von den unterschiedlichsten Faktoren abhängen und sich dementsprechend ändern. Auch die Größe der beiden Abschnitte B' und B" in Fig. 7 und in Fig. 8 ist als rein beispielhaft anzusehen und es kann in bestimmten Anwendungsfällen sinnvoll sein, entweder den inneren Abschnitt B' oder den äußeren Abschnitt B" größer zu machen als den jeweils anderen Abschnitt B" bzw. B'.

In den vorliegenden Ausführungsbeispielen ist das Sicherheitsgurtband 1 hinsichtlich seiner Längsachse symmetrisch ausgeführt. Dies ist jedoch nicht unbedingt erforderlich. Insbesondere ist es auch möglich, einen der beiden Kantenbereiche B mit bekannten Lösungen auszuführen. In diesem Zusammenhang könnte auch einer der beiden Kantenbereiche B mittels eines nicht dargestellten Hilfsfadens so abgemascht werden, dass die erforderliche Weichheit und Scheuerbeständigkeit erreicht wird.

Alternativ zu den in den Figuren 6 bis 8 dargestellten Ausführungsformen ist es auch möglich, die seitlichen Ränder bzw. Kanten des Sicherheitsgurtbands 1 unabhängig von der verwendeten Bindungsart in an sich bekannter Weise, d.h. nicht auf die hierin unter Bezugnahme auf die in den Figuren 6 bis 8 beschriebene Art und Weise auszuführen.

In der in den Figuren 2 bis 5 dargestellten Ausführungsform des Sicherheitsgurtbands kann beispielsweise auch eine sogenannte Rukaflex-Kante, eine Ripskante, eine Hohlkante, eine halbe Hohlkante oder eine Dreiviertelhohlkante zum Einsatz kommen. Da diese Ausführungen von Kanten dem Fachmann bekannt sind, werden sie hier nicht näher erläutert.

Des Weiteren ist es möglich, in den Kantenbereichen unabhängig von der verwendeten Bindungsart unterschiedliche Garnfeinheiten einzusetzen. Beispielsweise könnten in den Kantenbereichen dünnere Garne als im mittleren Bereich eingesetzt werden.

Auf Basis der hierin beschriebenen Ausführungsformen und Kombinationen sind vielfältige Designs des Sicherheitsgurtbands 1 möglich.

## Patentansprüche

1. Sicherheitsgurtband für ein Sicherheitsgurtsystem eines Kraftfahrzeugs, mit einem Gewebe aus Kettfäden und Schussfäden,
**dadurch gekennzeichnet, dass**
das Sicherheitsgurtband (1) über wenigstens einen Teil seiner Breite abwechselnd mit einer 1/2-Köperbindung und einer 2/1-Köperbindung gewebt ist.

2. Sicherheitsgurtband nach Anspruch 1,
**dadurch gekennzeichnet, dass**
zumindest in einem mittleren Bereich (A) des Sicherheitsgurtbands (1) abwechselnd eine 1/2-Köperbindung und eine 2/1-Köperbindung vorgesehen ist.

3. Sicherheitsgurtband nach Anspruch 2,
**dadurch gekennzeichnet, dass**
über die gesamte Breite des Sicherheitsgurtbands (1) abwechselnd eine 1/2-Köperbindung und eine 2/1-Köperbindung vorgesehen ist.

4. Sicherheitsgurtband nach Anspruch 1, 2 oder 3,
**dadurch gekennzeichnet, dass**
sich die 1/2-Köperbindung und die 2/1-Köperbindung nach einer bestimmten Anzahl an Rapporten abwechseln.

5. Sicherheitsgurtband nach einem der Ansprüche 1 bis 4,
**dadurch gekennzeichnet, dass**
sich die 1/2-Köperbindung und die 2/1-Köperbindung nach jedem Rapport abwechseln.

6. Sicherheitsgurtband nach Anspruch 4 oder 5,
**dadurch gekennzeichnet, dass**
jeder Rapport wenigstens drei Kettfäden (3) aufweist.

7. Sicherheitsgurtband nach Anspruch 1, 2 oder 3,
**dadurch gekennzeichnet, dass**
sich die 1/2-Köperbindung und die 2/1-Köperbindung nach jedem Kettfaden (3) abwechseln.

8. Sicherheitsgurtband nach Anspruch 7,
**dadurch gekennzeichnet, dass**
jeder Rapport wenigstens sechs Kettfäden (3) aufweist.

9. Sicherheitsgurtband nach einem der Ansprüche 1 bis 8,
**dadurch gekennzeichnet, dass**
die Bindung derart ausgeführt ist, dass nach einer bestimmten Anzahl an Rapporten der Verlauf des Köpergrats wechselt.

10. Sicherheitsgurtband nach einem der Ansprüche 1 bis 9,
**dadurch gekennzeichnet, dass**
sich die Bindung der Schussfäden (4) in Längsrichtung des Sicherheitsgurtbands (1) in bestimmten Abständen ändert.

11. Sicherheitsgurtband nach einem der Ansprüche 1 bis 10,
**dadurch gekennzeichnet, dass**
das Sicherheitsgurtband (1) senkrecht zu seiner Längsrichtung einen mittleren Bereich (A) und zwei außenliegende Kantenbereiche (B) aufweist, wobei wenigstens einer der Kantenbereiche (B) mit einer 1/2-Köperbindung und einer 2/1-Köperbindung gewebt ist.

12. Sicherheitsgurtband nach Anspruch 11,
**dadurch gekennzeichnet, dass**
der mittlere Bereich (A) des Sicherheitsgurtbands (1) mit einer von einer 1/2-Köperbindung und einer 2/1-Köperbindung unterschiedlichen Bindung gewebt ist.

13. Sicherheitsgurtband nach Anspruch 12,
**dadurch gekennzeichnet, dass**
der mittlere Bereich (A) des Sicherheitsgurtbands (1) mit einer 2/2-Köperbindung gewebt ist.

14. Sicherheitsgurtband nach Anspruch 11, 12 oder 13,
**dadurch gekennzeichnet, dass**
der wenigstens eine Kantenbereich (B) senkrecht zu der Längsrichtung des Sicherheitsgurtbands (1) einen inneren Abschnitt (B') und einen äußeren Abschnitt (B'') aufweist, dass das Gewebe (2) zwei jeweils gleichzeitig eingebrachte Schussfäden (4a,4b) aufweist, dass einer der jeweiligen Schussfäden (4a) sowohl durch den inneren Abschnitt (B') als auch durch den äußeren Abschnitt (B'') verläuft, und dass der andere der jeweiligen Schussfäden (4b) nur durch den inneren Abschnitt (A) und nicht durch den äußeren Abschnitt (B'') verläuft.

15. Sicherheitsgurtband nach Anspruch 14,
**dadurch gekennzeichnet, dass**
die beiden gleichzeitig eingebrachten Schussfäden (4a,4b) wenigstens annähernd dieselbe Garnfeinheit aufweisen.

16. Sicherheitsgurtband nach Anspruch 14,
**dadurch gekennzeichnet, dass**
der sowohl durch den inneren Abschnitt (B') als auch durch den äußeren Abschnitt (B'') verlaufende Schussfaden (4a) eine geringere Garnfeinheit aufweist als der nur durch den inneren Abschnitt (B') und nicht durch den äußeren Abschnitt (B'') verlaufende Schussfaden (4b).

17. Sicherheitsgurtband nach einem der Ansprüche 14, 15 oder 16,
**dadurch gekennzeichnet, dass**
die Schussfäden (4a,4b) aus Materialien mit unterschiedlichen Eigenschaften bestehen.

18. Sicherheitsgurtband nach einem der Ansprüche 11 bis 17,
**dadurch gekennzeichnet, dass**
die Kettfäden (3) in wenigstens einem der Kantenbereiche (B) eine geringere Garnfeinheit aufweisen als die Kettfäden (3) in dem mittleren Bereich (A).

19. Sicherheitsgurtband nach Anspruch 18,
**dadurch gekennzeichnet, dass**
die Garnfeinheit der Kettfäden (3) in wenigstens einem der Kantenbereiche (B) um mindestens das Zweifache geringer ist als die Garnfeinheit der Kettfäden (3) in dem mittleren Bereich (A).

20. Sicherheitsgurtband nach einem der Ansprüche 1 bis 19,
**dadurch gekennzeichnet, dass**
über die Breite des wenigstens einen Kantenbereichs (B) abwechselnd eine 1/2-Köperbindung und eine 2/1-Köperbindung vorgesehen ist.

21. Sicherheitsgurtband nach Anspruch 11,
**dadurch gekennzeichnet, dass**
dass sich die 1/2-Köperbindung und die 2/1-Köperbindung nach jedem Kettfaden abwechseln.

22. Verfahren zur Herstellung eines Sicherheitsgurtbands für ein Sicherheitsgurtsystem eines Kraftfahrzeugs, wobei aus Kettfäden und Schussfäden ein Gewebe hergestellt wird,
**dadurch gekennzeichnet, dass**
das Sicherheitsgurtband (1) derart mit einer 1/2-Köperbindung und einer 2/1-Köperbindung gewebt wird, dass über wenigstens einen Teil der Breite des Sicherheitsgurtbands (1) abwechselnd eine 1/2-Köperbindung und einer 2/1-Köperbindung vorgesehen ist.

## Claims

1. A seat-belt strap for a seat-belt system of a motor vehicle, comprising a fabric woven from warp threads and weft threads,
**characterized in that**
the woven construction of the seat-belt strap (1) alternates across at least part of its width between a 1/2 twill weave and a 2/1 twill weave.

2. The seat-belt strap as claimed in claim 1,
**characterized in that**
the alternation of 1/2 twill weave and 2/1 twill weave is provided at least in a central region (A) of the seat-belt strap (1).

3. The seat-belt strap as claimed in claim 2,
**characterized in that**
the alternation of 1/2 twill weave and 2/1 twill weave is provided across the full width of the seat-belt strap (1).

4. The seat-belt strap as claimed in claim 1, 2 or 3,
**characterized in that**
the 1/2 twill weave and the 2/1 twill weave alternate after a specified number of repeats.

5. The seat-belt strap as claimed in any of claims 1 to 4,
**characterized in that**
the 1/2 twill weave and the 2/1 twill weave alternate after every repeat.

6. The seat-belt strap as claimed in claim 4 or 5,
**characterized in that**
each repeat includes three or more warp threads (3).

7. The seat-belt strap as claimed in claim 1, 2 or 3,
**characterized in that**
the 1/2 twill weave and the 2/1 twill weave alternate after every warp thread (3).

8. The seat-belt strap as claimed in claim 7,
**characterized in that**
each repeat includes six or more warp threads (3).

9. The seat-belt strap as claimed in any of claims 1 to 8,
**characterized in that**
the woven construction is such that the course of the twill line changes after a specified number of repeats.

10. The seat-belt strap as claimed in any of claims 1 to 9,
**characterized in that**
the interlacing of the weft threads (4) changes at specified intervals in the longitudinal direction of the seat-belt strap (1).

11. The seat-belt strap as claimed in any of claims 1 to 10,
**characterized in that**
in the direction perpendicular to its longitudinal direction the seat-belt strap (1) has one central region (A) and two outlying selvage regions (B), wherein the woven construction of either or both of the selvage regions (B) comprises a 1/2 twill weave and a 2/1 twill weave.

12. The seat-belt strap as claimed in claim 11,
**characterized in that**
the woven construction of the central region (A) of the seat-belt strap (1) comprises a construction other than a 1/2 twill weave and other than a 2/1 twill weave.

13. The seat-belt strap as claimed in claim 12,
**characterized in that**
the woven construction of the central region (A) of the seat-belt strap (1) is a 2/2 twill weave.

14. The seat-belt strap as claimed in claim 11, 12 or 13,
**characterized in that**
the at least one selvage region (B) has an inner portion (B') and an outer portion (B") perpendicularly to the longitudinal direction of the seat-belt strap (1), **in that** the woven fabric (2) has two mutually concurrently inserted weft threads (4a, 4b), **in that** one of the pair of weft threads (4a) extends not only through the inner portion (B') but also through the outer portion (B"), and **in that** the other one of the pair of weft threads (4b) only extends through the inner portion (A) and not through the outer portion (B").

15. The seat-belt strap as claimed in claim 14,
**characterized in that**
the two concurrently inserted weft threads (4a, 4b) have at least approximately the same yarn fineness.

16. The seat-belt strap as claimed in claim 14,
**characterized in that**
the weft thread (4a), which extends not only through the inner portion (B') but also through the outer portion (B"), has a lower yarn fineness than the weft thread (4b), which only extends through the inner portion (B') and not through the outer portion (B").

17. The seat-belt strap as claimed in any of claims 14, 15 and 16,
**characterized in that**
the weft threads (4a, 4b) consist of materials having different properties.

18. The seat-belt strap as claimed in any of claims 11 to 17,
**characterized in that**
the warp threads (3) in either or both of the selvage regions (B) have a lower yarn fineness than the warp threads (3) in the central region (A).

19. The seat-belt strap as claimed in claim 18,
**characterized in that**
the yarn fineness of the warp threads (3) in either or both of the selvage regions (B) is two or more times lower than the yarn fineness of the warp threads (3) in the central region (A).

20. The seat-belt strap as claimed in any of claims 1 to 19,
**characterized in that**
an alternation of 1/2 twill weave and 2/1 twill weave is provided across the width of the at least one selvage region (B).

21. The seat-belt strap as claimed in claim 11,
**characterized in that**
the 1/2 twill weave and the 2/1 twill weave alternate after every warp thread.

22. A method of forming a seat-belt strap for a seat-belt system of a motor vehicle wherein a woven fabric is formed from warp threads and weft threads,
**characterized in that**
the seat-belt strap (1) is woven with a 1/2 twill weave and a 2/1 twill weave such that the woven construction of the seat-belt strap (1) alternates across at least part of its width between a 1/2 twill weave and a 2/1 twill weave.

## Revendications

1. Bande de ceinture de sécurité pour un système de ceinture de sécurité d'un véhicule lourd, avec un tissu composé de fils de chaîne et de fils de trame,
**caractérisée en ce que**,
la ceinture de sécurité (1) est tissée sur au moins une partie de sa largeur alternativement avec une 1/2-liaison corporelle et une 2/1-liaison corporelle.

2. Bande de ceinture de sécurité selon la revendication 1,
**caractérisée en ce que**,
dans au moins une zone centrale (A) de la ceinture de sécurité (1) est prévue de façon alternative une 1/2-liaison corporelle et une 2/1-liaison corporelle.

3. Bande de ceinture de sécurité selon la revendication 2,
**caractérisée en ce que**,
par dessus la totalité de la largeur de la ceinture de sécurité (1) sont prévues alternativement une 1/2-liaison corporelle et une 2/1-liaison corporelle.

4. Bande de ceinture de sécurité selon les revendications 1, 2 ou 3,
**caractérisée en ce que**,
la 1/2-liaison corporelle et la 2/1-liaison corporelle sont remplacées après un nombre déterminé de rapports.

5. Bande de ceinture de sécurité selon l'une des revendications 1 à 4,
**caractérisée en ce que**,
la 1/2-liaison corporelle et la 2/1-liaison corporelle sont remplacées après chaque rapport.

6. Bande de ceinture de sécurité selon les revendications 4 ou 5,
**caractérisée en ce que**,
chaque rapport présente au moins trois fils de chaîne (3).

7. Bande de ceinture de sécurité selon les revendications 1, 2 ou 3,
**caractérisée en ce que**,
la 1/2-liaison corporelle et la 2/1-liaison corporelle se remplacent après chaque fil de chaîne (3).

8. Bande de ceinture de sécurité selon la revendication 7,
**caractérisée en ce que**,
chaque rapport comprend au moins six fils de chaîne (3).

9. Bande de ceinture de sécurité selon l'une des revendications 1 à 8,
**caractérisée en ce que**,
la liaison est réalisée de telle manière que, après un certain nombre de rapports, le déroulement du degré du corps est modifié.

10. Bande de ceinture de sécurité selon l'une des revendications 1 à 9,
**caractérisée en ce que**,
la liaison des fils de trame (4) dans la direction longitudinale de la bande de ceinture de sécurité (1) est modifiée à des distances déterminées.

11. Bande de ceinture de sécurité selon l'une des revendications 1 à 10,
**caractérisée en ce que**,
la bande de ceinture de sécurité (1) a, perpendiculairement à sa direction longitudinale une zone médiane (A) et deux zones de bordure (B) extérieures, dans laquelle au moins une des zone de bordure extérieure (B) est tissée avec une 1/2-liaison corporelle et une 2/1-liaison corporelle.

12. Bande de ceinture de sécurité selon la revendication 11,
**caractérisée en ce que**,
la zone médiane (A) de la bande de ceinture de sécurité (1) est tissée avec une liaison comportant alternativement une 1/2-liaison corporelle et une 2/1-liaison corporelle.

13. Bande de ceinture de sécurité selon la revendication 12,
**caractérisée en ce que**,
la zone médiane (A) de la bande de ceinture de sécurité (1) est tissée avec une une 2/2-liaison corporelle.

14. Bande de ceinture de sécurité selon les revendications 11, 12 ou 13,
**caractérisée en ce que**,
au moins une zone de bordure (B) comporte un rebord interne (B') perpendiculaire à la direction longitudinale de la bande de ceinture de sécurité (1) et un rebord extérieur (B"), **en ce que** le tissage (2) comporte deux fils de trame (4a, 4b) introduits simultanément, **en ce qu'**un desdits fil de trame (4a) s'étend aussi bien à travers le rebord interne (B') qu'à travers le rebord externe (B"), et **en ce que** l'autre des fils de trame correspondant (4b) ne s'étend qu'à travers la section interne (A) et non à travers le rebord externe (B").

15. Bande de ceinture de sécurité selon la revendication 14,
**caractérisée en ce que**,
les deux fils de trame introduits simultanément (4a, 4b) présentent au moins approximativement la même finesse de fil.

16. Bande de ceinture de sécurité selon la revendication 14,
**caractérisée en ce que**,
le fil de trame (4a) qui traverse à la fois le rebord interne (B') ainsi que le rebord externe (B") comporte une finesse de fil inférieure à celle du fil de trame (4b) qui traverse le rebord interne (B') et non le rebord externe (B").

17. Bande de ceinture de sécurité selon l'une des revendications 14, 15 ou 16,
**caractérisée en ce que**,
les fils de trame (4a, 4b) sont réalisés en des matériaux ayant des caractéristiques différentes.

18. Bande de ceinture de sécurité selon l'une des revendications 11 à 17,
**caractérisée en ce que**,
les fils de chaîne (3) comportent, dans au moins une zone de rebord (B) une finesse de fil inférieure à celle des fils de chaîne (3) dans la zone médiane (A).

19. Bande de ceinture de sécurité selon la revendication 18,
**caractérisée en ce que**,
la finesse des fils de chaîne (3) dans au moins une zone de bordure (B) est au moins deux fois inférieure à la finesse des fils de chaîne (3) dans la section médiane (A).

20. Bande de ceinture de sécurité selon l'une des revendications 1 à 19,
**caractérisée en ce que**,
sur la largeur d'au moins une des zones de bordure (B) une 1/2-liaison corporelle et une 2/1-liaison corporelle sont alternativement prévues.

21. Bande de ceinture de sécurité selon la revendication 11,
**caractérisée en ce que**,
la 1/2-liaison corporelle et la 2/1-liaison corporelle sont inversées après chaque fil de chaîne.

22. Procédé pour réaliser une bande de ceinture de sécurité pour un système de ceinture de sécurité d'un véhicule lourd, dans lequel les fils de chaîne et de fils de trame composent un tissu,
**caractérisé en ce que**,
la bande de ceinture de sécurité (1) est tissée de telle manière avec une 1/2-liaison corporelle et une 2/1-liaison corporelle que, sur au moins une partie de la largeur de la bande de ceinture de sécurité (1) une 1/2-liaison corporelle et une 2/1-liaison corporelle sont alternativement prévues.
